# EUROPEAN PATENT SPECIFICATION

(11) **EP 3 613 649 B1**
(45) Date of publication and mention of the grant of the patent: **20.10.2021**
(21) Application number: 18787669.3
(22) Date of filing: 16.04.2018
(51) Int. Cl.: B62D 5/04, B62D 6/10, G01L 5/22, B62D 15/02

(54) **AUTOMOBILE POWER STEERING SENSOR**
SERVOLENKSENSOR FÜR EIN AUTOMOBIL
CAPTEUR DE DIRECTION ASSISTÉE D'AUTOMOBILE

(30) Priority: 20.04.2017 CN 201710260072
(43) Date of publication of application: 26.02.2020
(73) Proprietor: HELLA GMBH & CO. KGAA, 59552 Lippstadt (DE); Hella Shanghai Electronics Co., Ltd, Shanghai 201201 (CN)
(72) Inventor: HUANG, Zhigao, Shanghai 201201 (CN); HOPPE, Steffen, 59552 Lippstadt (DE); LIU, Zhenyu, Shanghai 201201 (CN); DI, Jiantao, Shanghai 201201 (CN); ZHU, Wei, Shanghai 201201 (CN); ZHANG, Quanhui, Shanghai 201201 (CN)
(74) Representative: Bringemeier, Ulrich Heinz
(86) International application number: PCT/CN2018/083239
(87) International publication number: WO 2018/192454

(56) References cited:
- CN-A- 101 508 310
- CN-A- 101 957 169
- CN-A- 104 470 793
- CN-A- 106 468 607
- CN-U- 203 148 612
- CN-U- 203 148 612
- DE-A1- 10 108 883
- KR-A- 20130 098 691
- US-A1- 2008 007 251
- US-A1- 2008 110 690
- US-A1- 2008 150 519
- US-A1- 2016 146 634

## Description

### TECHNICAL FIELD

The present disclosure relates to the field of automobile components, and in particular to an automobile power steering sensor.

### BACKGROUND

The term "automobile power steering" refers to increasing external force to overcome the steering resistance such that a driver can implement the steering operation by less force, and it also refers to as "power steering". The automobile power steering simplifies and easies the driving operation, enables the automobile to response more quickly, and improves the safety thereof, thus obtaining extensive attention. An automobile power steering sensor detects the magnitude and direction of torque or rotation angle of the steering wheel produced during the steering operation of the driver, converts the necessary information into digital signals, inputs the digital signals into a control unit, which, in turn, calculates the signals and acquires a moment corresponding to the driving condition, and issues instructions to drive an electromotor to work. Then the output torque of the electromotor implements power by a gearing device. Therefore, the sensor is one of the most important components of an automobile power steering system.

In the prior art of the automobile power steering sensor, the radial positioning of an input shaft rotor need to rely on an upper housing, and match with its installation. However, during rotation, the input shaft rotor might have friction with the upper housing, which results in the wearing of the former. In view of this, it is necessary to additionally embed a circle steel wire spring within the rotor, such that there is always an outwardly-supporting force which could offset the gap caused by the wearing of the input shaft rotor. In the axial direction, the input shaft rotor is welded with a gear, such that the upper housing is fixed relatively in the axial direction. The technical solution that PCB assembly is connected securely with the upper housing, PCB plate is clamped between the lower housing and the input shaft rotor, and the upper housing and the lower housing are connected by laser welding, features with complex processes. Besides, the rotor is manufactured by plastic injection molding, and connected with the input shaft by way of laser welding, which often results in problems such as inaccurate positioning during securing and motion, and complex processes. Document US2016/146634, which is seen as the closest prior art, shows a typical automobile power steering sensor, comprising an upper housing, a lower housing, an input shaft rotor, a PCB assembly, and an output shaft rotor, wherein the input shaft rotor is mounted on an input shaft of an automobile power steering apparatus. The PCB assembly is mounted on a lower part of the upper housing, the upper housing and the lower housing are securely connected, fixing the PCB assembly in a space formed by the upper housing and the lower housing. The output shaft rotor is mounted on the output shaft of the automobile power steering apparatus, and when the automobile power steering apparatus operates, the input shaft rotor and the input shaft rotate coaxially at the same speed, the output shaft rotor and the output shaft rotate coaxially at the same speed, and the upper housing keeps concentric and coaxial with the input shaft rotor.

### SUMMARY

The present disclosure aims to provide an automobile power steering sensor, which changes the structure of the housing, having it integrated with the structural feature of sliding bearing, thereby altering the assembly relationship of the sensor housing and the input and output shaft rotors, simplifying the mounting process of the sensor itself, and at the same time, under the circumstances that ambient temperature changes and wearing exists, keeping the PCB steady, and keeping the sensor and the input shaft concentric all along.

Particularly, the present disclosure provides an automobile power steering sensor, comprising an upper housing, a lower housing, an input shaft rotor, a PCB assembly, and an output shaft rotor, wherein the input shaft rotor is mounted on an input shaft of an automobile power steering apparatus and sleeved on an upper part of the upper housing, the PCB assembly is mounted on a lower part of the upper housing, and the upper housing and the lower housing are securely connected, fixing the PCB assembly in a space formed by the upper housing and the lower housing. The upper housing is sleeved on the input shaft of the automobile power steering apparatus, and the output shaft rotor is mounted on the output shaft of the automobile power steering apparatus. When the automobile power steering apparatus operates, the input shaft rotor and the input shaft rotate coaxially at the same speed, the output shaft rotor and the output shaft rotate coaxially at the same speed, and the upper housing keeps concentric and coaxial with the input shaft rotor.

Preferably, a mounting part is provided within the upper housing, a sliding bearing structure is integrated on the mounting part; the sliding bearing structure is annular and provided in the middle of the upper housing; the input shaft rotor is sleeved upon the sliding bearing of the upper housing, and the input shaft rotor and the upper housing are provided coaxially and concentrically.

Preferably, the sliding bearing comprises at least one support part and at least one elastic part, wherein the support part and the elastic part are provided at intervals.

Preferably, the sliding bearing structure comprises 3 groups of the support parts and the elastic parts, wherein the support parts and the elastic parts are completely the same respectively, and two equilateral triangles with the same center are obtained by connecting the centers of the support parts and the elastic parts respectively.

Preferably, the support part comprises a first surface and a second surface parallel to each other, wherein a convex plate is provided at the end of the first surface, which protrudes along the radial direction of the upper housing and far away from the shaft center; a convex column is provided on the convex plate along the direction parallel to the axial direction of the upper housing, wherein the second surface is connected with the convex plate, and the first surface is higher than the second surface.

Preferably, the elastic part is of a trapezoidal structure, and a groove is provided between the elastic part and the support part; a projection is provided on the free end of the elastic part along the radial direction of the upper housing and toward the shaft center thereof; a hollow slot is provided on the surface of the projection toward the upper housing; and a hollow structure is also provided within the elastic part.

Preferably, the groove provided between the elastic part and the support part is U-shaped.

Preferably, the mounting part of the upper housing extends downward through the upper housing, and the PCB assembly is sleeved annularly on the lower end of the mounting part of the upper housing.

Preferably, the structural feature of the outer edge of the lower housing corresponding to the upper housing extends upwards, and upon being assembled, the outer wall of the lower housing wraps the structure on the upper housing.

Preferably, the upper housing and the lower housing are connected securely by way of snapping.

Preferably, the upper housing is provided with a hook structure, and correspondingly, the lower housing is provided with a clip slot structure. During assembly, the hook structure of the upper housing is snapped into the clip slot structure of the lower housing, thereby connecting securely the upper housing and the lower housing.

Comparing with the prior art, the technical advantages of the present disclosure lie in:
1) the input shaft rotor has a simplified structure and improved precision, is independent of the whole housing, and guarantees the concentricity of the input shaft rotor and the input shaft;
2) due to that during rotation, the input shaft rotor does not have friction or wearing with the upper housing in the radial direction, it is no need to add a circle steel wire spring to offset the gap caused by the friction or wearing;
3) in the axial direction of the sensor, due to that the input shaft rotor presses directly on the upper housing, the axial positioning of the upper housing can be guaranteed equally, thus there is no need any more to fit with gear parts;
4) the sliding bearing structure integrated on the upper housing enables the housing and the input shaft to keep in slight interference fit, and is also able to deform its own structure to offset the gap caused by wearing;
5) it uses the way of snapping connection to overcome the problem of complex mounting process of the upper and lower housings, and to facilitate the later dissembling and maintenance thereof, or the like.

### BRIEF DESCRIPTION OF THE DRAWINGS

Fig.1 is a structural view of an automobile power steering sensor according to one preferred embodiment of the present disclosure.
Fig.2 is a sectional view of an automobile power steering sensor according to one preferred embodiment of the present disclosure.
Fig.3 is a structural view of an upper housing of an automobile power steering sensor according to one preferred embodiment of the present disclosure.

### Reference numerals:

1- input shaft rotor,
2-upper housing; 20-sliding bearing; 200-sliding bearing structure; 201-support part; 202-elastic part,
3- PCB assembly,
4-lower housing,
5-output shaft rotor,
6-input shaft,
7-output shaft.

### DETAILED DESCRIPTION

Hereinafter, a detailed description will be given for the technical advantages of the present disclosure in conjunction with the drawings and specific embodiments.

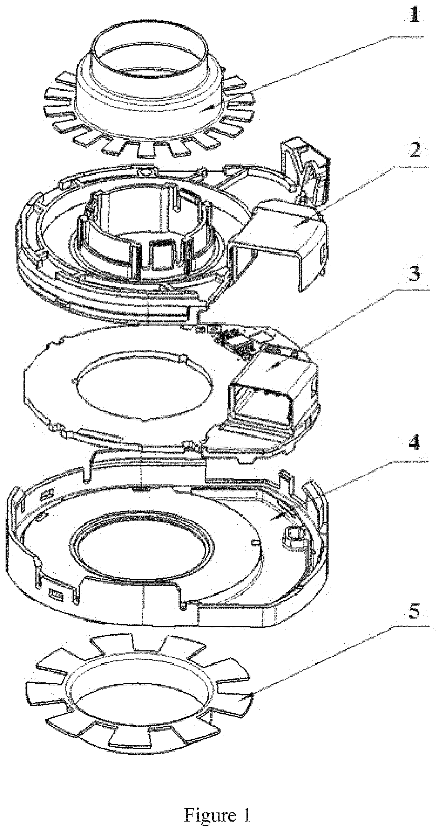

With reference to Fig.1, it is a structural view of an automobile power steering sensor according to one preferred embodiment of the present disclosure. It can be seen from this drawing that the automobile power steering sensor provided by the present embodiment comprises an upper housing 2, a lower housing 4, an input shaft rotor 1, a PCB assembly 3, and an output shaft rotor 5.

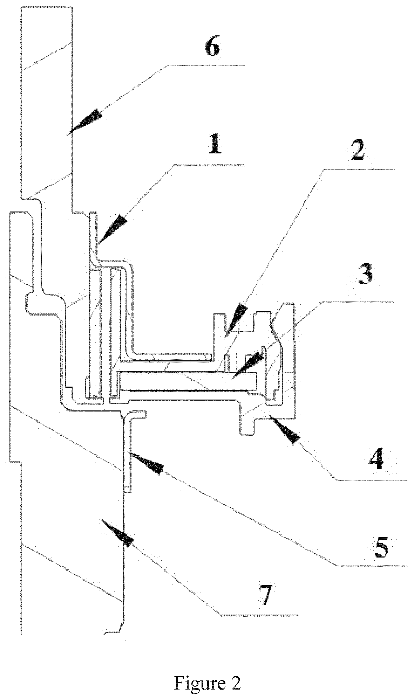

Further referring to Fig.2, it can be seen therefrom that in the present embodiment, during assembly, the input shaft rotor 1 is mounted upon an input shaft 6 of an automobile power steering apparatus and sleeved on an upper part of the upper housing 2; the PCB assembly 3 is mounted upon the lower part of the upper housing 2, and the upper housing 2 and the lower housing 4 are securely connected, fixing the PCB assembly 3 in a space formed therebetween. The upper housing 2 is sleeved on the input shaft 6 of the automobile power steering apparatus, and the output shaft rotor 5 is mounted on the output shaft 7 of the automobile power steering apparatus. When the automobile power steering apparatus operates, the input shaft rotor 1 and the input shaft 6 rotate coaxially at the same speed, the output shaft rotor 5 and the output shaft 7 rotate coaxially at the same speed, and the upper housing 2 and the input shaft rotor 1 keep concentric and coaxial with each other. In view of the aforementioned configuration, the embodiment realizes not only that the input shaft rotor 1 is independent of the whole housing, but also that the structure of the input shaft rotor is simplified, hence it guarantees the axial positioning of the upper housing equally, without need to fit with a gearing part, nor to add a circle steel wire spring to offset the gap caused by the friction and wearing in the direction of radial with the upper housing during the rotation of the input shaft rotor.

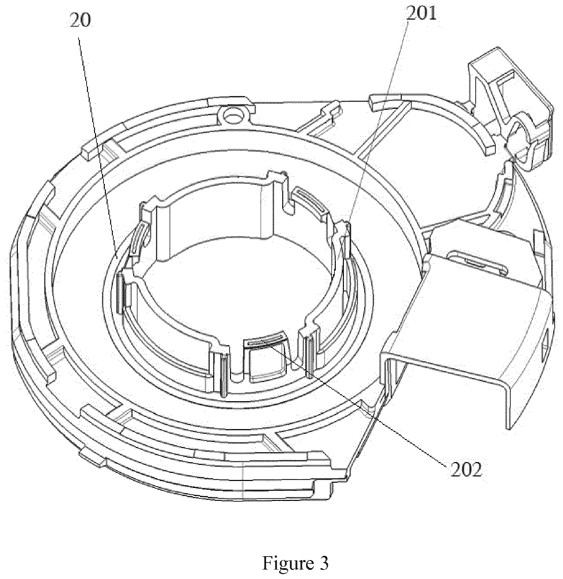

Meanwhile, referring to Fig.3, it is a structural view of an upper housing of an automobile power steering sensor according to one preferred embodiment of the present disclosure. It can be seen therefrom that preferably, in the embodiment, a mounting part 20 is provided within the upper housing 2, and a sliding bearing structure 200 is integrated on the upper part of the mounting part 20. The sliding bearing structure 200 is annular and provided in the middle of the upper housing 2. Referring to Fig.2, it can be seen that during the assembly of the automobile power steering sensor, first, the upper housing 2 is sleeved onto the input shaft 6 of the automobile power steering apparatus, and the input shaft rotor 1 is also sleeved onto the input shaft 6, then is sleeved upon the sliding bearing 200 of the upper housing 2, such that when the automobile power steering apparatus operates, the upper housing 2 and the input shaft rotor 1 is able to keep coaxial and concentric all the time.

Further referring to Fig.3, it can be seen therefrom that the sliding bearing 200 integrated on the upper housing 2 in this embodiment comprises support parts 201 and elastic parts 202, wherein the support parts 201 and the elastic parts 202 are provided at intervals, that is, each elastic part 202 is provided between two support parts 201 while each support part 201 is also provided between two elastic parts 202. In view of the aforementioned configuration, when the elastic parts 202 receives the effect of the external stress, the support parts 201 are able to supply supporting force to the elastic parts 202, thereby to a certain extent, preventing the elastic parts 202 from damage caused by the effect of the external stress.

Further referring to Fig.3, it can be seen therefrom that the support part 201 provided in this embodiment comprises two arc-shaped surfaces parallel to each other, that is, a first surface 203 and a second surface 204, wherein a convex plate is provided at the end of the first surface 203, which protrudes from the first surface 203 along the radial direction of the upper housing 2 and far away from the shaft center. Moreover, a convex column is provided on the convex plate along the direction parallel to the axial direction of the upper housing 2, wherein the second surface 204 is connected with the convex plate, and the first surface 203 is higher than the second surface 204. In view of the aforementioned configuration, when the input shaft rotor 1 is sleeved into the sliding bearing structure 200, the convex column contact directly with the input shaft rotor 1, thereby avoiding the damage of the upper housing 2 resulted from the friction produced by the rotation of the input shaft rotor 1 during the operation of the power steering apparatus; meanwhile, in the present embodiment, the input shaft rotor 1 and the sliding bearing structure 200 fit with each other. Hence the second surface 204 is provided to connect with two adjacent convex plates, so as to supply the whole sliding bearing structure 200 with support force, which prevents effectively the damage of the sliding bearing structure from the stress produced when the input shaft rotor 1 and the sliding bearing structure 200 assemble fitting with each other.

Furthermore, preferably, with reference to Fig.3, in the present embodiment, the elastic parts 201 of the sliding bearing structure 200 are of a trapezoidal structure, wherein there is also provided with a groove between an elastic part 202 and a support part 201. Besides, a projection is provided on the free end of the elastic part 202 along the radial direction of the upper housing 2 and toward the shaft center thereof. On the surface of the projection toward the upper housing 2 is provided a hollow slot, while there is also a hollow structure within the elastic part 202. The reason for using the aforementioned configuration in the present embodiment is that the projection structure of the elastic part 202 makes it possible that the upper housing 2 and the input shaft 6 assume in slight interference fit, and when the automobile power steering apparatus operates, the groove, the hollow slot and the hollow structure inside cooperate to enable the elastic part 202 to have a certain resilience force like a leaf spring, thus the upper housing 2 is capable of deforming itself to offset the fit clearance resulted from the mutual wearing of the input shaft rotor 1 and the upper housing 2, such that the input shaft rotor 1 and the upper housing 2 can keep coaxial and concentric all along.

Preferably, as shown in Fig.3, the sliding bearing structure 300 in the present embodiment comprises 3 groups of the support parts 201 and the elastic parts 202, wherein the support parts 201 and the elastic parts 202 are completely the same respectively, and two equilateral triangles with the same center can be obtained by connecting the centers of the support parts 201 and the elastic parts 202 respectively. The above-mentioned design enables the whole sliding bearing structure 200 to be steadier and improves the endurance to the stress produced during the assembly and operation of the automobile power steering sensor, thereby reducing the damage rate of the upper housing 2 effectively.

Referring to Fig.3, more preferably, the groove provided between the elastic part 202 and the support part 201 is U-shaped. This configuration improves the bearing capacity of the elastic part.

Further preferably, referring to Fig.2, the mounting part 20 of the upper housing 2 extends downward through the upper housing 2, and the PCB assembly 3 is sleeved annularly on the lower end of the mounting part of the upper housing 2, so as to keep the PCB assembly 3 and the upper housing 2 coaxial and concentric all the time.

Further preferably, referring to Fig.1, the structural feature of the outer edge of the lower housing 4 corresponding to the upper housing 2 extends upwards, and upon being assembled, the outer wall of the lower housing 4 wraps the structure on the upper housing 2. This design is also able to protect the structure on the upper housing 2 from the external force produced during the assembly and the operation of the automobile power steering apparatus, or from other damages.

More preferably, in this embodiment, the upper housing 2 is provided with a hook structure, and correspondingly, the lower housing 4 is provided with a clip slot structure. During assembly, the hook structure of the upper housing 2 is snapped into the clip slot structure of the lower housing 4, thus the upper housing 2 and the lower housing 4 is connected securely by way of snapping. This design overcomes the problem of complex mounting process of the upper and lower housings, and facilitates the later dissembling and maintenance thereof, and the like.

In summary, in the present disclosure, the input shaft rotor has a simplified structure and improved precision, is independent of the whole housing, and guarantees the concentricity of the input shaft rotor and the input shaft; meanwhile, due to that during rotation, the input shaft rotor does not have friction or wearing with the upper housing in the radial direction, it is no need to add a circle steel wire spring to offset the gap caused by the friction or wearing. Besides, in the axial direction of the sensor, due to that the input shaft rotor presses directly on the upper housing, the axial positioning of the upper housing can be guaranteed equally, thus there is no need any more to fit with gear parts; furthermore, the sliding bearing structure integrated on the upper housing enables the housing and the input shaft to keep in slight interference fit, and is also able to deform its own structure to offset the gap caused by wearing; finally the present disclosure uses the way of snapping connection to overcome the problem of complex mounting process of the upper and lower housings, and to facilitate the later dissembling and maintenance thereof, or the like.

It should be noted that the embodiments of the present disclosure are of good operability, but not for constituting any limitation to the protection scope thereof. A person skilled in the art can make alterations or modifications to the embodiments by the aforementioned technical contents, to form an equivalent and effective embodiment. Without departing from the technical solutions of the present disclosure, any amendments, equivalent changes and modifications to the above-mentioned embodiments based on the technical essence of the present disclosure, shall fall within the scope defined by the technical solutions of the present disclosure.

## Claims

1. An automobile power steering sensor, comprising an upper housing, a lower housing, an input shaft rotor, a PCB assembly, and an output shaft rotor, wherein
the input shaft rotor is mounted on an input shaft of an automobile power steering apparatus and sleeved on an upper part of the upper housing,
the PCB assembly is mounted on a lower part of the upper housing,
the upper housing and the lower housing are securely connected, fixing the PCB assembly in a space formed by the upper housing and the lower housing,
the upper housing is sleeved on the input shaft of the automobile power steering apparatus,
the output shaft rotor is mounted on the output shaft of the automobile power steering apparatus, and
when the automobile power steering apparatus operates, the input shaft rotor and the input shaft rotate coaxially at the same speed, the output shaft rotor and the output shaft rotate coaxially at the same speed, and the upper housing keeps concentric and coaxial with the input shaft rotor.

2. The automobile power steering sensor according to Claim 1, wherein
a mounting part is provided within the upper housing, a sliding bearing structure is integrated on the mounting part, the sliding bearing structure is annular and provided in the middle of the upper housing, the input shaft rotor is sleeved on the sliding bearing of the upper housing, and the input shaft rotor and the upper housing are provided coaxially and concentrically.

3. The automobile power steering sensor according to Claim 2, wherein
the sliding bearing comprises at least one support part and at least one elastic part, and the support part and the elastic part are provided at intervals.

4. The automobile power steering sensor according to Claim 3, wherein
the sliding bearing structure comprises 3 groups of the support parts and the elastic parts, wherein the support parts and the elastic parts are completely the same respectively, and two equilateral triangles with the same center are obtained by connecting the centers of the support parts and the elastic parts respectively.

5. The automobile power steering sensor according to Claim 3, wherein
the support part comprises a first surface and a second surface parallel to each other,
a convex plate is provided at the end of the first surface, which protrudes along the radial direction of the upper housing and far away from the shaft center;
a convex column is provided on the convex plate along the direction parallel to the axial direction of the upper housing,
the second surface is connected with the convex plate, and
the first surface is higher than the second surface.

6. The automobile power steering sensor according to Claim 3, wherein
the elastic part is of a trapezoidal structure,
a groove is provided between the elastic part and the support part;
a projection is provided on the free end of the elastic part along the radial direction of the upper housing and toward the shaft center thereof,
a hollow slot is provided on the surface of the projection toward the upper housing, and
a hollow structure is also provided within the elastic part.

7. The automobile power steering sensor according to Claim 6, wherein
the groove provided between the elastic part and the support part is U-shaped.

8. The automobile power steering sensor according to Claim 1, wherein
the mounting part of the upper housing extends downward through the upper housing, and the PCB assembly is sleeved annularly on the lower end of the mounting part of the upper housing.

9. The automobile power steering sensor according to Claim 1, wherein
the structural feature of the outer edge of the lower housing corresponding to the upper housing extends upwards, and upon being assembled, the outer wall of the lower housing wraps the structure on the upper housing.

10. The automobile power steering sensor according to Claim 1, wherein
the upper housing and the lower housing are connected securely by way of snapping.

11. The automobile power steering sensor according to Claim 10, wherein
the upper housing is provided with a hook structure, and correspondingly, the lower housing is provided with a clip slot structure; during assembly, the hook structure of the upper housing is snapped into the clip slot structure of the lower housing, thereby connecting securely the upper housing and the lower housing.

## Patentansprüche

1. Automobilservolenksensor, umfassend ein oberes Gehäuse, ein unteres Gehäuse, einen Eingangswellenrotor, eine Leiterplattenanordnung und einen Ausgangswellenrotor, wobei
der Eingangswellenrotor auf einer Eingangswelle einer Automobilservolenkvorrichtung montiert und auf einem oberen Teil des oberen Gehäuses hülsenartig aufgesetzt ist,
die Leiterplattenanordnung auf einem unteren Teil des oberen Gehäuses montiert ist,
das obere Gehäuse und das untere Gehäuse sicher verbunden sind und die Leiterplattenanordnung in einem von dem oberen Gehäuse und dem unteren Gehäuse ausgebildeten Raum befestigen,
das obere Gehäuse hülsenartig auf der Eingangswelle der Automobilservolenkvorrichtung angebracht ist,
der Ausgangswellenrotor auf der Ausgangswelle der Automobilservolenkvorrichtung montiert ist, und wenn die Automobilservolenkvorrichtung arbeitet, drehen sich der Eingangswellenrotor und die Eingangswelle koaxial mit derselben Geschwindigkeit, drehen sich der Ausgangswellenrotor und die Ausgangswelle koaxial mit derselben Geschwindigkeit, und das obere Gehäuse bleibt konzentrisch und koaxial mit dem Eingangswellenrotor.

2. Automobilservolenksensor nach Anspruch 1, wobei innerhalb des oberen Gehäuses ein Montageteil bereitgestellt ist, am Montageteil eine Gleitlagerstruktur integriert ist, die Gleitlagerstruktur ringförmig und in der Mitte des oberen Gehäuses bereitgestellt ist, der Eingangswellenrotor hülsenartig auf dem Gleitlager des oberen Gehäuses angebracht ist, und der Eingangswellenrotor und das obere Gehäuse koaxial und konzentrisch bereitgestellt sind.

3. Automobilservolenksensor nach Anspruch 2, wobei das Gleitlager mindestens ein Stützteil und mindestens ein elastisches Teil umfasst und das Stützteil und das elastische Teil in Intervallen bereitgestellt sind.

4. Automobilservolenksensor nach Anspruch 3, wobei die Gleitlagerstruktur 3 Gruppen der Stützteile und der elastischen Teile umfasst, wobei die Stützteile beziehungsweise die elastischen Teile komplett die gleichen sind und sich durch Verbinden der Zentren der Stützteile beziehungsweise der elastischen Teile zwei gleichseitige Dreiecke mit dem gleichen Zentrum ergeben.

5. Automobilservolenksensor nach Anspruch 3, wobei das Stützteil eine erste Oberfläche und eine zweite Oberfläche umfasst, die parallel zueinander sind, am Ende der ersten Oberfläche eine konvexe Platte bereitgestellt ist, die entlang der radialen Richtung des oberen Gehäuses und weit weg vom Wellenzentrum vorsteht;
an der konvexen Platte entlang der Richtung parallel zur axialen Richtung des oberen Gehäuses eine konvexe Säule bereitgestellt ist,
die zweite Oberfläche mit der konvexen Platte verbunden ist und die erste Oberfläche höher als die zweite Oberfläche ist.

6. Automobilservolenksensor nach Anspruch 3, wobei das elastische Teil von einer trapezförmigen Struktur ist,
zwischen dem elastischen Teil und dem Stützteil eine Nut bereitgestellt ist;
am freien Ende des elastischen Teils entlang der radialen Richtung des oberen Gehäuses und hin zur Wellenmitte davon ein Vorsprung bereitgestellt ist,
auf der Oberfläche des Vorsprungs hin zum oberen Gehäuse ein hohler Schlitz bereitgestellt ist, und
auch innerhalb des elastischen Teils eine hohle Struktur bereitgestellt ist.

7. Automobilservolenksensor nach Anspruch 6, wobei die zwischen dem elastischen Teil und dem Stützteil bereitgestellte Nut u-förmig ist.

8. Automobilservolenksensor nach Anspruch 1, wobei sich das Montageteil des oberen Gehäuses durch das obere Gehäuse nach unten erstreckt und die Leiterplattenanordnung ringförmig hülsenartig am unteren Ende des Montageteils des oberen Gehäuses angebracht ist.

9. Automobilservolenksensor nach Anspruch 1, wobei sich das Strukturmerkmal der äußeren Kante des mit dem oberen Gehäuse korrespondierenden unteren Gehäuses nach oben erstreckt, und, wenn montiert, die äußere Wand des unteren Gehäuses die Struktur am oberen Gehäuse umhüllt.

10. Automobilservolenksensor nach Anspruch 1, wobei das obere Gehäuse und das untere Gehäuse durch Rastung sicher verbunden sind.

11. Automobilservolenksensor nach Anspruch 10, wobei das obere Gehäuse mit einer Hakenstruktur versehen ist und das untere Gehäuse dementsprechend mit einer Clip-Nut-Struktur versehen ist; während des Zusammenbauens wird die Hakenstruktur des oberen Gehäuses in die Clip-Nut-Struktur des unteren Gehäuses eingerastet und verbindet dabei sicher das obere Gehäuse und das untere Gehäuse.

## Revendications

1. Capteur de direction assistée automobile comprenant un boîtier supérieur, un boîtier inférieur, un rotor d'arbre d'entrée, une carte de circuits imprimés et un rotor d'arbre de sortie, sachant que
le rotor d'arbre d'entrée est monté sur un arbre d'entrée d'un appareil de direction assistée automobile et emmanché sur une partie supérieure du boîtier supérieur, la carte de circuits imprimés est montée sur une partie inférieure du boîtier supérieur,
le boîtier supérieur et le boîtier inférieur sont solidement reliés et fixent la carte de circuits imprimés dans un espace constitué par le boîtier supérieur et le boîtier inférieur,
le boîtier supérieur est emmanché sur l'arbre d'entrée de l'appareil de direction assistée automobile,
le rotor d'arbre de sortie est monté sur l'arbre de sortie de l'appareil de direction assistée automobile, et lorsque l'appareil de direction assistée automobile fonctionne, le rotor d'arbre d'entrée et l'arbre d'entrée tournent coaxialement à la même vitesse, le rotor d'arbre de sortie et l'arbre de sortie tournent coaxialement à la même vitesse et le boîtier supérieur reste concentrique et coaxial avec le rotor d'arbre d'entrée.

2. Capteur de direction assistée automobile selon la revendication 1, sachant qu'une pièce de montage est fournie à l'intérieur du boîtier supérieur, une structure de palier lisse est intégrée sur la pièce de montage, la structure de palier lisse est annulaire et fournie au milieu du boîtier supérieur, le rotor d'arbre d'entrée est emmanché sur le palier lisse du boîtier supérieur et le rotor d'arbre d'entrée et le boîtier supérieur sont conçus de manière coaxiale et concentrique.

3. Capteur de direction assistée automobile selon la revendication 2, sachant que le palier lisse comprend au moins une partie support et au moins une partie élastique, et la partie support et la partie élastique sont prévues à intervalles.

4. Capteur de direction assistée automobile selon la revendication 3, sachant que la structure de palier lisse comprend 3 groupes de pièces de support et de pièces élastiques, sachant que les pièces de support et les pièces élastiques sont complètement identiques et que deux triangles équilatéraux avec le même centre sont obtenus en reliant les centres des pièces de support et des pièces élastiques.

5. Capteur de direction assistée automobile selon la revendication 3, sachant que la partie de support comprend une première surface et une seconde surface parallèles l'une à l'autre,
une plaque convexe est prévue à l'extrémité de la première surface, qui fait saillie le long de la direction radiale du boîtier supérieur et est éloignée du centre de l'arbre ;
une colonne convexe est fournie sur la plaque convexe le long de la direction parallèle à la direction axiale du boîtier supérieur,
la deuxième surface est reliée à la plaque convexe, et la première surface est plus haute que la deuxième surface.

6. Capteur de direction assistée automobile selon la revendication 3, sachant que la partie élastique est de structure trapézoïdale,
une rainure est fournie entre la partie élastique et la partie de support ;
une saillie est prévue sur l'extrémité libre de la partie élastique le long de la direction radiale du boîtier supérieur et vers le centre de l'arbre de celui-ci,
une fente creuse est prévue sur la surface de la saillie en direction du boîtier supérieur, et
une structure creuse est également prévue à l'intérieur de la partie élastique.

7. Capteur de direction assistée automobile selon la revendication 6, sachant que
la rainure prévue entre la partie élastique et la partie support est en forme de U.

8. Capteur de direction assistée automobile selon la revendication 1, sachant que la partie de montage du boîtier supérieur s'étend vers le bas à travers le boîtier supérieur, et la carte de circuits imprimés est emmanchée de manière annulaire sur l'extrémité inférieure de la partie de montage du boîtier supérieur.

9. Capteur de direction assistée automobile selon la revendication 1, sachant que la caractéristique structurelle du bord extérieur du boîtier inférieur correspondant au boîtier supérieur s'étend vers le haut, et lors de l'assemblage, la paroi extérieure du boîtier inférieur enveloppe la structure du boîtier supérieur.

10. Capteur de direction assistée automobile selon la revendication 1, sachant que le boîtier supérieur et le boîtier inférieur sont reliés solidement par encliquetage.

11. Capteur de direction assistée automobile selon la revendication 10, sachant que le boîtier supérieur est pourvu d'une structure de crochet et que, de manière correspondante, le boîtier inférieur est pourvu d'une structure de fente d'attache ; pendant l'assemblage, la structure de crochet du boîtier supérieur est encliquetée dans la structure de fente d'attache du boîtier inférieur, reliant ainsi solidement le boîtier supérieur et le boîtier inférieur.
